**Europäisches Patentamt**

**European Patent Office**

**Office européen des brevets**

(19)

(11) Veröffentlichungsnummer: **0 025 959**
**B1**

(12) # EUROPÄISCHE PATENTSCHRIFT

(45) Veröffentlichungstag der Patentschrift:
**29.05.85**

(51) Int. Cl.⁴: **F 24 D  3/00**, B 28 D  1/18

(21) Anmeldenummer: **80105507.0**

(22) Anmeldetag: **13.09.80**

(54) **Verfahren zur Herstellung einer Steinplatte für eine Flächenheizung.**

(30) Priorität: **17.09.79  DE 2937498**
**02.09.80  DE 3032968**

(43) Veröffentlichungstag der Anmeldung:
**01.04.81 Patentblatt 81/13**

(45) Bekanntmachung des Hinweises auf die Patenterteilung:
**29.05.85 Patentblatt 85/22**

(84) Benannte Vertragsstaaten:
**AT BE CH FR GB IT LI LU NL SE**

(56) Entgegenhaltungen:
**CH - A - 176 280**
**DE - A - 2 030 832**
**DE - A - 2 031 094**
**DE - A - 2 535 522**
**DE - A - 2 553 967**
**DE - A - 2 636 196**
**DE - A - 2 809 086**
**DE - B - 1 244 992**
**DE - C - 926 571**
**DE - U - 7 536 141**
**US - A - 3 897 820**

(73) Patentinhaber: **Knappe, Ilona, Norikerstrasse 27,**
**D-8500 Nürnberg (DE)**

(72) Erfinder: **Knappe, Horst, Norikerstrasse 27,**
**D-8500 Nürnberg (DE)**

(74) Vertreter: **Patentanwälte Czowalla . Matschkur +**
**Partner, Dr.-Kurt-Schumacher-Strasse 23 Postfach 9109,**
**D-8500 Nürnberg 11 (DE)**

BUNDESDRUCKEREI BERLIN

## Beschreibung

Die Erfindung betrifft ein Verfahren zur Herstellung einer Steinplatte für eine Flächenheizung, in deren einer Seite mäanderförmige Kanäle zur Aufnahme eines Heizrohres oder eines elektrischen Heizleiters eingeschnitten sind.

Es sind verschiedene Verfahren zur Herstellung einer Flächenheizung aus unterschiedlichen Werkstoffen bekannt. So offenbart die deutsche Offenlegungsschrift 2 336 902 eine für eine Flächenheizung dienende Platte aus Tonmaterialien, in die ein gestreckt verlaufender rohrförmiger Hohlraum in das gieß- oder stampffähige Material eingebettet ist. Diese Ausbildung eignet sich jedoch nicht für aus Naturstein hergestellte Flächenheizungen.

Weiterhin ist aus der Deutschen Auslegeschrift 1 244 992 ein Verfahren zur Herstellung einer elektrischen Wandheizung bekannt, die unter anderem eine Hartmörtelplatte mit Kabelkanälen zur Aufnahme der Heizkabel aufweist. Die Kabelkanäle werden in der Hartmörtelplatte eingeschnitten.

Die CH-A-176 280 beschreibt ein Wärmeaustauscherelement mit Kanälen, die von Wärmeträgern durchströmt werden.

Diese Kanäle sind entweder aus dem vollen Stein herausgearbeitet oder — bei der Verwendung von Gußstein — als Metallrohre eingegossen. Dieses Verfahren ist im Falle der Verwendung von Naturstein durch die komplizierte Bearbeitung sehr arbeits- und kostenintensiv und nicht bei allen Steinarten anzuwenden. Als Werkzeug für derartige Verfahren kann beispielsweise der in der Deutschen Auslegeschrift 2 031 094 offenbarte Diamanthohlbohrer verwendet werden.

Bei den beschriebenen vorbekannten Verfahren werden die Kanäle bzw. Rinnen im Rahmen der Herstellung der Platte eingeformt oder durch ein kompliziertes und aufwendiges Bearbeitungsverfahren eingefräst.

Aufgabe der vorliegenden Erfindung ist die Entwicklung eines Verfahrens, das eine rationelle Bearbeitungsweise von Natursteinplatten zur Herstellung von Flächenheizungen gestattet.

Die Erfindung löst die Aufgabe dadurch, daß eine Natursteinplatte verwendet wird, in welche zur Bildung der kreisbogenförmigen Umlenk-Abschnitte der mäanderförmigen Kanäle mittels eines kreisringförmigen Schneidkopfes kreisringförmige Nuten eingeschnitten werden. Dieses Bearbeitungsverfahren läßt sich ohne einen großen Aufwand an Kosten und Arbeitsgeräten exakt und schnell durchführen. Auf diese Weise ist eine rationelle Herstellung von Flächenheizungen aus Natursteinplatten gewährleistet.

Es hat sich als besonders vorteilhaft erwiesen, daß in die Kanäle ein Rohr bzw. ein Schlauch eingelegt und der verbleibende Rinnenhohlraum mit einem Füllstoff ausgefüllt wird. Hierzu eignet sich ein Kunstharz, insbesondere Epoxidharz, dem zweckmäßig ein Füllkörperanteil, wie z. B. Steinmehl, zugesetzt wird.

Die Erfindung sieht weiterhin vor, daß kreisringförmige Nuten derart nebeneinander eingeschnitten werden, daß je zwei benachbarte Ringnuten einander um etwa die Nutenbreite überschneiden und daß in diesen Ringnuten das Wärmeträgerrohr bzw. der Heizleiter derart angeordnet wird, daß er beim Übergang von einer Ringnut zu einer benachbarten Ringnut entsprechend dem Radius der Ringnuten jeweils in entgegengesetzter Richtung abgekrümmt ist. Auf diese Weise wird die Arbeit des Einschneidens der Nuten in den Stein erleichtert. Außerdem eröffnet sich die Möglichkeit, eine größere Länge des Wärmeträgerrohrs oder Heizleiters je Flächeneinheit darin unterzubringen. Die gegenseitige Überschneidung der Ringnuten gestattet den einwandfreien Übergang des einzulegenden Rohres oder Heizleiters zwischen zwei Ringnuten, wobei sich jeweils die Bewegungsrichtung im entgegengesetzten Sinn ändert. Das Rohr bzw. der Heizleiter erhält dann praktisch eine mehr oder weniger stark ausgeprägte Schlangenform, so daß je Flächeneinheit der Platte eine große Länge Wärmeträger oder Wärmeerzeuger untergebracht werden kann. Die Ringnuten gestatten eine Führung des Rohres oder Heizleiters in Kreisbogenform ohne scharfe Ecken, so daß eine einwandfreie Strömungsführung gewährleistet ist. Es genügt im einfachsten Fall, eine fortlaufende Reihe von Ringnuten vorzusehen. Es können auch mehrere Reihen auch ungeordnete Anordnungen solcher Ringnuten über eine Plattenfläche verteilt werden.

Die Erfindung sieht in weiterer Ausgestaltung vor, daß die Ringnuten in regelmäßigen Abständen in rechtwinklig zueinander verlaufenden Reihen eingeschnitten werden. In diesem Fall läßt sich das Wärmeträgerrohr bzw. der Heizleiter mit einem Umschlingungswinkel von jeweils 180° in jeder Ringnut innerhalb der Reihe und um 270° am Umkehrpunkt, d. h. am Ende jeder Reihe führen. In jeder der parallelen Reihen von Ringnuten ist dann ein solcher Strang des Rohres oder Heizleiters geführt, wobei die Rohr- bzw. Leiterenden in entsprechenden Anschlußelementen aus der Platte ausmünden.

Eine alternative Ausführungsform besteht darin, daß die Ringnuten in regelmäßigen Abständen in spitzwinklig zueinander verlaufenden Reihen angeordnet sind. Bei dieser Ausbildungsform ist die Schlangenform der in die Nuten eingelegten Rohre oder Heizleiter gestreckter, was gegebenenfalls zweckmäßig sein kann.

Es liegt auch im Rahmen der Erfindung, daß die in die Plattenfläche eingeschnittenen Kanäle mittels einer weiteren Platte verschlossen werden, die auf die die Kanäle aufweisende Plattenfläche aufgeklebt wird. Bei dieser Ausführungsform ist die wärmeleitende Masse durch die Verdoppelung der Steinplatten wesentlich größer. Andererseits läßt sich der Abschluß des Kanals in besonders einfacher Weise bewerkstelligen. Natürlich können auch in diesem Fall Rohre in die Rinne eingelegt werden. Das Verkleben der beiden Platten kann wiederum mit einem geeigneten Kunstharz erfolgen. Die zweite Platte kann gleichfalls aus Natur- oder Kunststein bestehen. Es kann sich aber auch um eine Metall- oder Kunststoff- oder auch Mehrschichtplatte handeln.

Die Erfindung erlaubt es weiterhin, den neben dem Rohr oder Schlauch verbleibenden Nuthohlraum mit einem ggf. einen Füllkörperanteil aufweisenden Kunstharz auszufüllen.

Weitere Merkmale, Einzelheiten und Vorteile der Erfindung ergeben sich aus der folgenden Beschreibung einiger bevorzugter Ausführungsformen der Erfindung sowie anhand der Zeichnung. Hierbei zeigt

Fig. 1 eine Ausführungsform der erfindungsgemäß bearbeiteten Natursteinplatte,

Fig. 2 eine weitere Ausführungsform der erfindungsgemäß bearbeiteten Natursteinplatte,

Fig. 3 die Grundform der Platte nach Fig. 1 in Draufsicht,

Fig. 4 einen Schnitt etwa entlang der Linie IV-IV in Fig. 3,

Fig. 5 eine abgewandelte Ausführungsform im Schnitt entsprechend Fig. 4,

Fig. 6 ein vergrößertes Detail der Ausmündung und

Fig. 7 einen Schnitt etwa entlang der Linie VII-VII in Fig. 6.

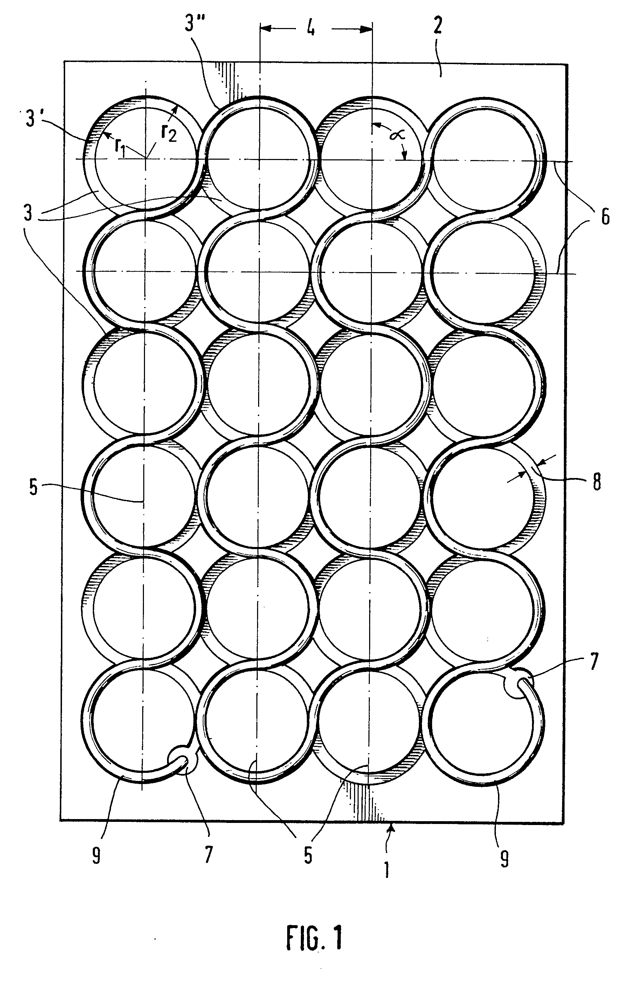

Die in Fig. 1 dargestellte Platte 1 weist eine rechteckige Grundform auf. In die Plattenoberfläche 2 sind vier Reihen von je sechs Ringnuten 3 mit einem Innenradius $r_1$ und dem Außenradius $r_2$ eingeschnitten. Der Abstand 4 dieser Reihen 5 beträgt $r_1 + r_2$.

Im rechten Winkel $\alpha$ hierzu ergeben sich die Querreihen 6 der Ringnuten 3. Im auf der Zeichnung unteren Bereich der Platte 1 sind an den den Ecken der Platte 1 benachbarten Ringnuten 3 je eine zylindrische Vertiefung 7 angeordnet, die senkrecht zur Plattenebene, die hier der Zeichnungsebene entspricht, aus dieser ausmünden.

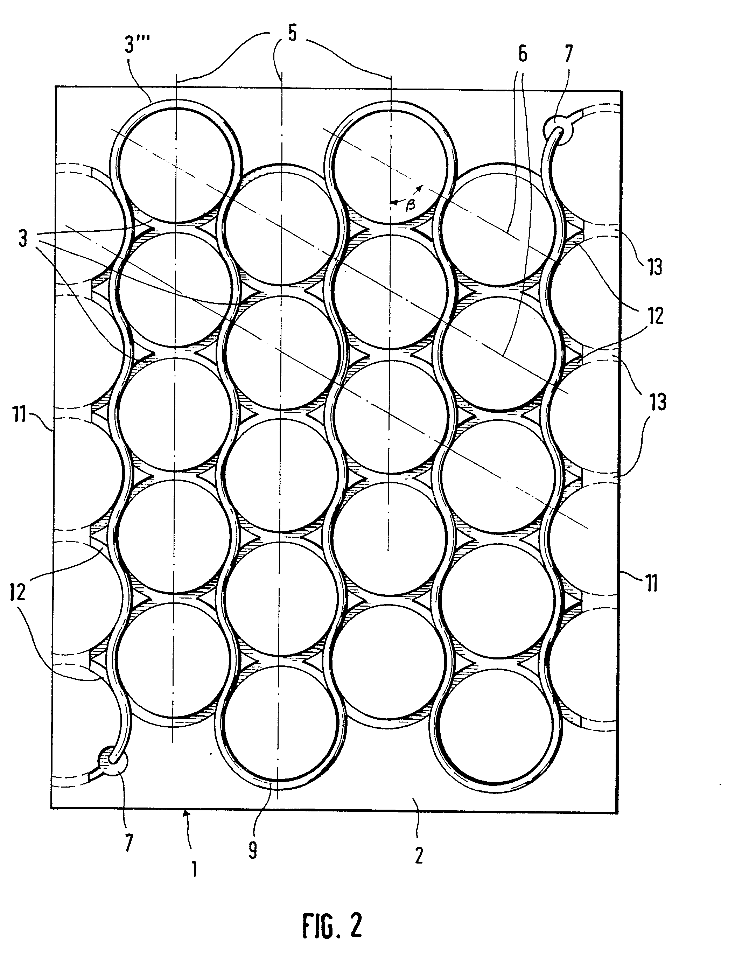

Bei der Ausführungsform nach Fig. 2 sind die Ringnuten 3 gewissermaßen auf Lücke angeordnet, und die Reihen 5 und 6 der Ringnuten 3 stehen im spitzen Winkel $\beta$ aufeinander. Ungeachtet dessen überschneiden sich jeweils zwei benachbarte Ringnuten 3 um ihre Breite 8 in der gleichen Weise wie bei der Ausführungsform nach Fig. 1.

In die Ringnuten 3 ist bei der wiedergegebenen Ausführungsform ein Rippenschlauch 9 eingelegt, dessen Durchmesser 10 etwa der Breite 8 jeder Ringnut 3 entspricht. Dieser Schlauch 9 beginnt an einer der Ausnehmungen 7 der Platte 1 und führt zunächst durch die Ringnuten 3 der entsprechenden Reihe 5. Dabei durchläuft er jeweils 180° einer jeden Ringnut 3 mit Ausnahme der Ringnut 3' am Ende dieser Reihe. Diese berührt er nur über einen Weg von 90°. Dafür umschlingt der Rippenschlauch 9 aber die in der Reihe 6 benachbarte Ringnut 3'' um 270°. Von einer Ringnut 3 zur anderen wird das Rohr bzw. der Schlauch 9 jeweils im entgegengesetzten Sinn abgekrümmt. Dieser Vorgang wiederholt sich über sämtliche aus Fig. 1 ersichtlichen Reihen 5 von je sechs Ringnuten 3, bis das Rohr 9 schließlich in der weiteren in der Platte 1 vorgesehenen Ausnehmung 7 endet, wo er in einer zur Plattenebene senkrechten Ebene aus der Platte 1 austritt.

Bei der Ausführungsform nach Fig. 2 sind an den beiden gegenüberliegenden Längskanten 11 der Platte 1 zusätzliche Ringnuten 12 vorgesehen, die nur etwa einen Halbkreis beschreiben und deren zur Stirnfläche ausmündende Enden 13, wie rechts in Fig. 2 dargestellt ist, verschlossen sind.

Bei dieser Ausführungsform ergibt sich die Möglichkeit einer wesentlich gestreckteren Führung des Schlauchs oder Rohres 9. Diese ist jeweils über einen Winkel von etwa 60° durch jede der an den Reihen 5 aufeinanderfolgenden Ringnuten 3 geführt. Lediglich am Ende der Reihe 5 umschlingt er die entsprechende Ringnut 3''' um etwa 240°. Bei der dargestellten Zahl von vier Reihen 5 der Ringnuten 3 befinden sich die für die Ausmündungen vorgesehenen Ausnehmungen 7 an entgegengesetzten Ecken der Platte 1.

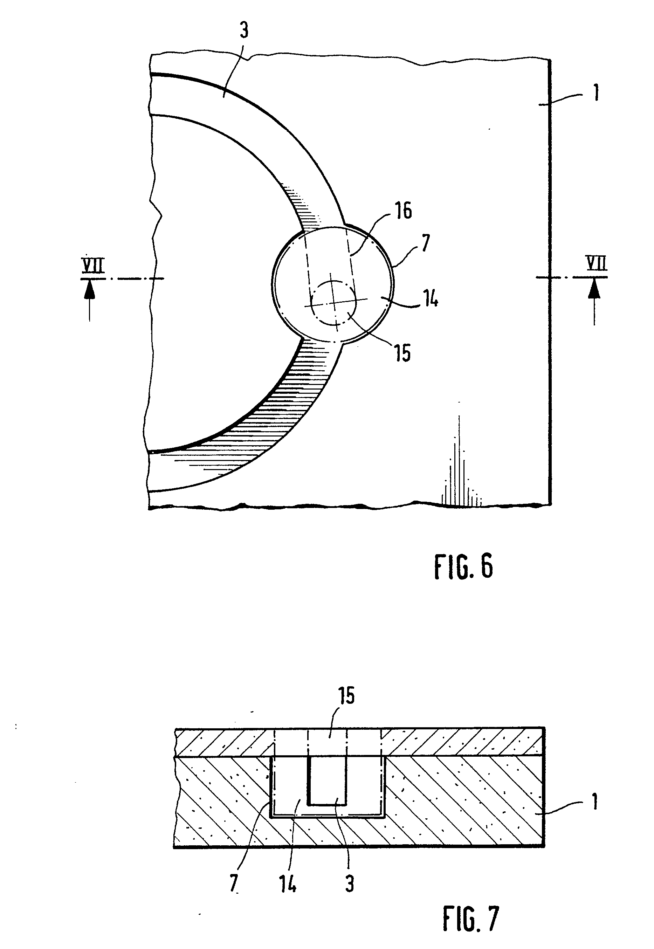

Eine solche Ausmündung 7 zeigen in vergrößertem Maßstab die Fig. 6 und 7. Die entsprechende Ringnut 3 mündet in die Ausnehmung 7 ein, und in diese ist ein Zylinderkörper 14 dicht eingesetzt, der eine senkrecht zur Plattenebene ausmündende Bohrung 15 und eine in die Ringnut 3 einmündende Bohrung 16 aufweist.

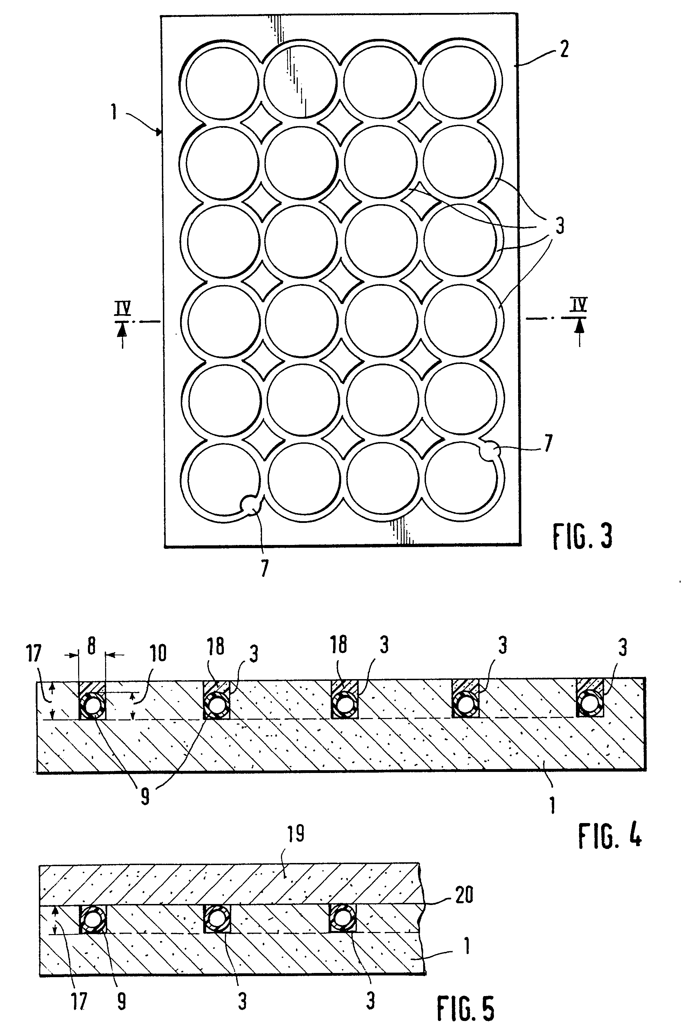

Die Schnitte nach Fig. 4 und 5 zeigen, daß die Breite 8 der Nuten 3 dem Durchmesser 10 der in diese eingelegten Rohre oder Schläuche 9 entspricht. Die Tiefe 17 der Ringnuten 3 ist größer als der Schlauchdurchmesser 10. Der darüber verbleibende Teil der Ringnut 3 ist mit einem Kunstharz- oder Steinmaterial 18 verschlossen. Bei der Ausführungsform nach Fig. 5 hingegen entsprechen sich Tiefe 17 der Ringnut 3 und Durchmesser 10 des Schlauches 9, und hier sind die Ringnuten 3 der Platte 1 durch eine zusätzliche Platte 19 verschlossen. Die Berührungsfläche 20 dient zweckmäßig der Verklebung mittels eines Kunstharzes.

An die Stelle des Rohres oder Schlauches 9 kann auch ein elektrischer Leiter angeordnet sein, der im allgmeinen eine wendelförmige Gestaltung aufweist. Dies ist, da für sich verständlich, im einzelnen nicht wiedergegeben.

## Patentansprüche

1. Verfahren zur Herstellung einer Steinplatte für eine Flächenheizung, in deren einer Seite (2) mäanderförmige Kanäle zur Aufnahme eines Heizrohres (9) oder eines elektrischen Heizleiters eingeschnitten sind, dadurch gekennzeichnet, daß eine Natursteinplatte (1) verwendet wird, in welche zur Bildung der kreisbogenförmigen Umlenk-Abschnitte der mäanderförmigen Kanäle mittels eines kreisringförmigen Schneidkopfes kreisringförmige Nuten (3) eingeschnitten werden.

2. Verfahren nach Anspruch 1, dadurch gekennzeichnet, daß in die Kanäle ein Rohr (9) bzw. ein Schlauch eingelegt und der verbleibende Rinnenhohlraum mit einem Füllstoff (18) ausgefüllt wird.

3. Verfahren nach Anspruch 2, dadurch gekennzeichnet, daß kreisringförmige Nuten (3) derart nebeneinander eingeschnitten werden, daß je zwei benachbarte Ringnuten (3) einander um etwa die Nutenbreite (8) überschneiden und daß in diesen Ringnuten (3) das Wärmeträgerrohr (9) bzw. der Heizleiter derart angeordnet wird, daß er beim Übergang von einer Ringnut (3) zu einer benachbarten Ringnut (3) entsprechend dem Radius (r) der Ringnuten jeweils in entgegengesetzter Richtung abgekrümmt ist.

4. Verfahren nach Anspruch 2 oder 3, dadurch gekennzeichnet, daß die Ringnuten (3) in regelmäßigen Abständen in rechtwinklig zueinander verlaufenden Reihen (5, 6) eingeschnitten werden.

5. Verfahren nach einem der Ansprüche 2 bis 4, dadurch gekennzeichnet, daß die Ringnuten (3) in regelmäßigen Abständen in spitzwinklig zueinander verlaufenden Reihen (5, 6) angeordnet sind.

6. Verfahren nach einem der Ansprüche 1 bis 5, dadurch gekennzeichnet, daß die in die Plattenfläche (2) eingeschnittenen Kanäle mittels einer weiteren Platte (19) verschlossen werden, die auf die die Kanäle aufweisende Plattenfläche (2) aufgeklebt wird.

7. Verfahren nach einem der Ansprüche 1 bis 6, dadurch gekennzeichnet, daß der neben dem Rohr (9) oder Schlauch verbleibende Nuthohlraum mit einem ggf. einen Füllkörperanteil aufweisenden Kunstharz ausgefüllt wird.

## Claims

1. A method of producing a stone slab for panel heating, in one side (2) of which, meandering passages are cut to receive a heating tube (9) or an electric heating conductor, characterised in that a natural stone slab (1) is used in which circular grooves (3) are cut by means of a circular cutting head in order to form the arcuate deflecting portions of the meandering passages.

2. A method as claimed in Claim 1, characterised in that a tube (9) or a flexible pipe is inserted in the passages and the remaining opening of the channels is filled in with a filler (18).

3. A method as claimed in Claim 2, characterised in that circular grooves (3) are cut side by side in such a manner that each two adjacent annular grooves (3) intersect one another by about the width (8) of a groove and that the heat carrier tube (9) or the heating conductor is disposed in these annular grooves (3) in such a manner that on passing over from one annular groove (3) to an adjacent annular groove (3), it is bent in the opposite direction in each case, according to the radius (r) of the annular grooves.

4. A method as claimed in Claim 2 or 3, characterised in that the annular gooves (3) are cut in rows (5, 6) extending at right angles to one another, with regular spacing.

5. A method as claimed in one of the Claims 2 to 4, characterised in that the annular grooves (3) are disposed in rows (5, 6) extending at an acute angle to one another, with regular spacing.

6. A method as claimed in one of the Claims 1 to 5, characterised in that the passages cut into the surface (2) of the slab are closed by means of a further slab (19) which is stuck to the slab surface (2) comprising the passages.

7. A method as claimed in one of the Claims 1 to 6, characterised in that te hollow space of the grooves remaining beside the tube (9) or flexible pipe is filled in with a synthetic resin possibly comprising a proportion of filling material.

## Revendications

1. Procédé pour la fabrication d'une plaque en pierre pour un chauffage par surfaces, d'une l'une (2) des faces de laquelle des canaux en forme de méandres sont élaborés pour recevoir un tube de chauffage (9) ou un conducteur électrique chauffant, caractérisé par le fait qu'on utilise une plaque (1) en pierre naturelle dans laquelle, pour former les tronçons de retour en arc de cercle des canaux en forme de méandres, des gorges circulaires (3) sont ménagées au moyen d'une tête de coupe circulaire.

2. Procédé selon la revendication 1, caractérisé par le fait qu'un tube (9) ou un tuyau souple est inséré dans les canaux, et que la partie restante de la cavité de saignées est comblée par un matériau de garnissage (18).

3. Procédé selon la revendication 2, caractérisé par le fait que des gorges circulaires (3) sont ménagées les unes à côté des autres de telle manière que deux gorges annulaires (3) voisines s'entrecoupent sur à peu près la largeur (8) d'une gorge; et par le fait que le tube (9) de conduction de chaleur ou le conducteur chauffant est disposé dans ces gorges annulaires (3) de telle sorte que, à la transition entre une gorges annulaires (3) et une gorge annulaire voisine (3), il soit arqué dans la direction opposée, d'une manière correspondant au rayon (r) des gorges annulaires.

4. Procédé selon la revendications 2 ou 3, caractérisé par le fait que les gorges annulaires (3) sont pratiquées à intervalles réguliers, selon des rangées (5, 6) s'étendant à angle droit les unes par rapport aux autres.

5. Procédé selon l'une des revendications 2 à 4, caractérisé par le fait que les gorges annulaires (3) sont disposées à intervalles réguliers, selon des rangées (5, 6) s'étendant à angle aigu les unes par rapport aux autres.

6. Procédé selon l'une des revendications 1 à 5, caractérisé par le fait que les canaux élaborés dans la surface (2) de la plaque sont obturés au moyen d'une autre plaque (19) qui est collée sur la surface (2) de la plaque présentant lesdits canaux.

7. Procédé selon l'une des revendications 1 à 6, caractérisé par le fait que la cavité des gorges subsistant à côté du tube (9) oudu tuyau souple est comblée par une résine synthétique renfermant éventuellement une part de matériau de garnissage.

FIG. 1

FIG. 2

**FIG. 3**

**FIG. 4**

**FIG. 5**

FIG. 6

FIG. 7